# DEMANDE DE BREVET EUROPEEN

(11) **EP 0 827 731 A1**
(43) Date de publication de la demande: **11.03.1998**
(21) Numéro de dépôt: 97402076.0
(22) Date de dépôt: 08.09.1997
(51) Int. Cl.: A61J 7/04

(54) **Pilulier électronique de poche à compartiments multiples**

(30) Priorité: 09.09.1996 FR 9610973
(71) Demandeur: Biostat, 92100 Boulogne (FR)
(72) Inventeur: Oriol, Valérie, 45770 Saran (FR); Laurent, Hervé, 92100 Boulogne (FR)
(74) Mandataire: Debay, Yves

(57) **Abrégé**

La présente invention concerne un pilulier électronique de poche à compartiments multiples comportant un circuit électronique à microprocesseur (1) contrôlant une mémoire (4) destinée à contenir l'ordonnance, un circuit (60) de commande d'un dispositif d'affichage (61), un voyant d'indications du compartiment à utiliser (81a à 81e) pour chaque compartiment, des moyens (3) de chargement de la mémoire (4) par des informations contenues dans un support amovible d'informations (2) èt constituée par l'ordonnance codée, des moyens de distribution de médicaments à l'unité et adaptables à des tailles et formes galéniques différentes, des moyens de contrôle (cpml à cpm5) automatique associé à chaque compartiment du passage d'un médicament et des moyens de déterminations (bcml à bcm5) automatiques du compartiment dans lequel le médicament a été prélevé.

## Description

La présente invention concerne un pilulier électronique de poche à compartiments multiples.

Il est connu par le brevet français 2 650 426, un pilulier électronique à compartiments multiples dans lequel un boîtier de taille conséquente incorpore plusieurs tiroirs et un système électronique qui permet la programmation des heures de prises de médicaments pour déclencher un système avertisseur de façon à ce que le patient puisse déclencher l'ouverture des tiroirs par pression sur un bouton pressoir. Ce type de dispositif permet de savoir si le patient a actionné le bouton poussoir pour la prise des médicaments, mais présente l'inconvénient d'être encombrant et ne permet pas de déterminer quels médicaments ont été pris. Par ailleurs, le dispositif électronique de programmation ne permet la programmation que sur le site du pilulier. Cette programmation ne permet l'introduction des informations qu'en reproduisant des défilements séquentiels qui permettent d'inscrire d'abord l'heure, ensuite le nom du médicament qui sera affiché sur l'écran, ainsi que la posologie.

De même le brevet européen EP 298 627 enseigne un pilulier comportant un nombre déterminé de compartiments et une horloge de programmation qui permet d'indiquer par un voyant le compartiment dans lequel le patient doit prélever son médicament. Un interrupteur d'acquittement permet de supposer que le médicament a été pris.

De plus, l'actionnement de l'interrupteur d'acquittement permet de stocker en mémoire l'heure, la date, et l'identification du médicament qui a été pris. Le dispositif de programmation est manuel et nécessite un grand nombre d'interventions de la part du pharmacien pour programmer l'appareil. Même si un lecteur de code à barres est prévu sur le côté de l'appareil pour rentrer certaines informations par lecture, les autres informations doivent être rentrées manuellement. Là encore, ce dispositif permet certes de penser que le patient a actionné le bouton du compartiment correspondant au médicament qu'il devait prendre, mais ne permet pas d'avoir la certitude qu'un comprimé ou une gélule ont été prélevés dans le tiroir.

Enfin le brevet 2 599 252, enseigne un dispositif indicateur portable qui permet d'indiquer sur un écran le nombre de médicaments et les posologies ainsi que les périodes auxquelles le patient doit prendre son médicament. Dans ce cas là, on a bien un dispositif "portable et programmé" à partir d'un ordinateur personnel connecté à cet élément portable. Toutefois, ce dispositif ne sert pas de pilulier et ne permet pas la distribution des pilules ou gélules au moment voulu, ainsi que la mesure de l'observance.

Le brevet 2 692 689 enseigne un procédé d'assistance médicale permettant, à partir d'un support amovible d'informations, de commander le fonctionnement d'un appareil à l'aide d'un programme chargé sur le support amovible d'informations. Le programme opérationnel mémorisé par ce support amovible est destiné à contrôler le fonctionnement d'appareils médicaux tels que, par exemple des appareils de dialyse, des appareils de mesure de tension artérielle, de poids, ou des glucomètres.

Enfin le brevet européen 0 554 137 enseigne un distributeur de médicaments du type distributeur de poche comportant un chargeur et un système de détection optique du passage du médicament distribué.

Toutefois ce type d'appareil de poche est limité à la distribution d'un seul médicament par chargeur et ne permettrait pas son utilisation pour la distribution de plusieurs médicaments.

En outre, la détection par diodes électroluminescentes et photorécepteur disposé de l'autre côté par rapport au trajet des comprimés ou gélules nécessite pour chaque trajet distributeur des comprimés ou gélules deux fils conducteurs pour alimenter la diode et le photorécepteur. Dans ce cas, un pilulier de poche ayant six compartiments de distribution de médicaments différents, nécessiterait uniquement pour la détection du passage du médicament le branchement d'une douzaine de connecteurs pour six compartiments.

Un premier but de l'invention est de proposer un pilulier à compartiments multiples dans lequel les informations correspondant aux médicaments et aux posologies, et à la période dans laquelle les médicaments doivent être pris, sont introduites autrement que par l'intermédiaire d'un clavier, d'un dispositif d'entrée ou d'un terminal de programmation.

Ce but est atteint par le fait que le pilulier électronique de poche à compartiments multiples comporte un circuit électronique à microprocesseur contrôlant une mémoire destinée à contenir l'ordonnance, un circuit de commandes d'un dispositif d'affichage, des voyants d'indications du compartiment à utiliser pour chaque compartiment, des moyens de chargement de la mémoire par des informations contenues dans un support amovible d'informations et constituée par l'ordonnance codée, des moyens de distribution de médicaments à l'unité et adaptables à des tailles et formes galéniques différentes, des moyens de contrôle automatique associé à chaque compartiment du passage d'un médicament et des moyens de déterminations automatiques du compartiment dans lequel le médicament a été prélevé.

Un autre but est de proposer un pilulier qui permette de s'assurer qu'un médicament a bien été distribué.

Ce but est atteint par le fait que le pilulier électronique de poche à compartiments multiples comporte des moyens d'enregistrement de la prise du médicament dans un fichier, et des moyens de décrémenter à chaque prise un compteur permettant de connaître le nombre de médicaments restant contenus dans un compartiment.

Selon une autre particularité, le pilulier comporte des moyens de détecter une prise d'urgence et d'enregistrer dans un second fichier de la mémoire la prise d'urgence.

Selon une autre particularité, le circuit électronique intégré est un circuit à microprocesseur, le dispositif d'affichage est à cristaux liquides.

Selon une autre particularité, les compartiments sont amovibles et comportent des moyens de connexions entre eux et le circuit intégré qui contrôle le fonctionnement du pilulier, et des moyens de vérifier l'intégrité du pilulier.

Selon une autre particularité, il comporte des moyens de déterminer le nombre de compartiments du pilulier.

Selon une autre particularité, il comporte des moyens de détection de la présence du support d'informations amovible.

Selon une autre particularité, le support d'informations amovible est une carte à puce à microprocesseur et mémoire non volatile programmable.

Selon une autre particularité, les moyens de détection du passage d'un médicament sont constitués dans chaque mécanisme distributeur de chaque compartiment amovible par l'interrupteur qui est actionné par le passage du médicament.

Selon une autre particularité, les moyens de détermination du compartiment sont constitués par une résistance associée à chaque compartiment, les résistances étant reliées en série à un convertisseur analogique digital et par un interrupteur commandé par le bouton de manoeuvre du mécanisme distributeur de chaque compartiment, les interrupteurs étant reliés par une première de leurs bornes entre deux résistances respectives et par l'autre borne à une alimentation.

Selon une autre particularité, le microprocesseur détecte et enregistre le suivi de l'ordonnance par le patient les prises d'urgence et incidents de fonctionnements.

Selon une autre particularité, le programme du microprocesseur gère les échanges avec le support d'informations amovible pour d'une part, charger la mémoire d'ordonnance lors de la réalisation de l'intégrité du pilulier et, d'autre part, mémoriser dans le support d'informations amovible le suivi du traitement et les prises d'urgence.

Selon une autre particularité, la mémorisation du suivi du traitement et des prises d'urgence s'effectue lors de la détection de la fin de l'ordonnance.

Selon une autre particularité, la mémorisation du suivi du traitement et des prises d'urgence s'effectue lors de chaque déclenchement d'interruption.

Un autre but de l'invention est donc de proposer un système qui permette de limiter le nombre de contacts nécessaires à la connectique.

Ce but est atteint par le fait que le circuit intégré est relié par des liaisons électriques à chacun des compartiments pourvus d'un mécanisme de distribution de médicaments, lesdits compartiments étant pourvus de moyens de détection de l'actionnement de ce mécanisme de distribution, les moyens de détection de l'actionnement étant constitués par un interrupteur commandé par un bouton de manoeuvre du mécanisme distributeur de chaque compartiment, ledit interrupteur étant connecté entre une résistance associée au compartiment, et l'alimentation électrique du circuit, chacune des résistances de chaque compartiment étant montée en série avec celle du compartiment suivant et reliée par une résistance supplémentaire à l'entrée d'un convertisseur analogique numérique permettant au circuit intégré de déterminer en fonction de l'amplitude du signal reçu l'identité du compartiment.

D'autres particularités et avantages de la présente invention apparaîtront plus clairement à la lecture de la description ci-après, faite en référence aux dessins annexés dans lesquels :
la figure 1 représente une vue schématique du circuit électronique du pilulier selon l'invention ;
la figure 2 représente une vue de dessus de l'affichage du pilulier.
la figure 3a représente une vue schématique d'un pilulier de poche assemblé ;
la figure 3b représente schématiquement le circuit de détection de l'appui sur le bouton de délivrance ;
la figure 3c représente une vue schématique du circuit électrique de détection du passage du médicament.

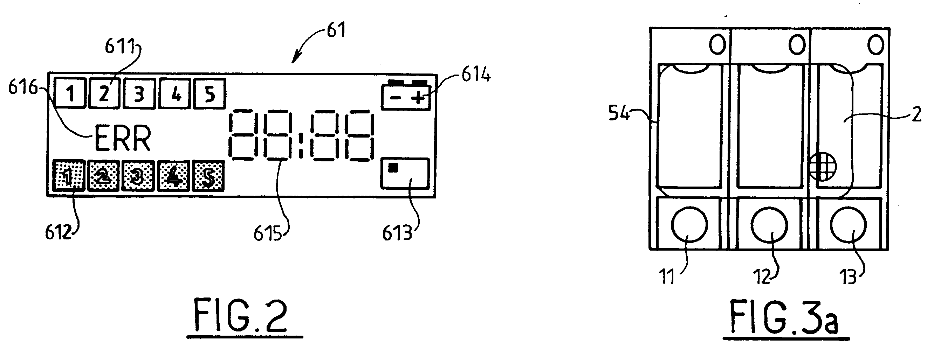

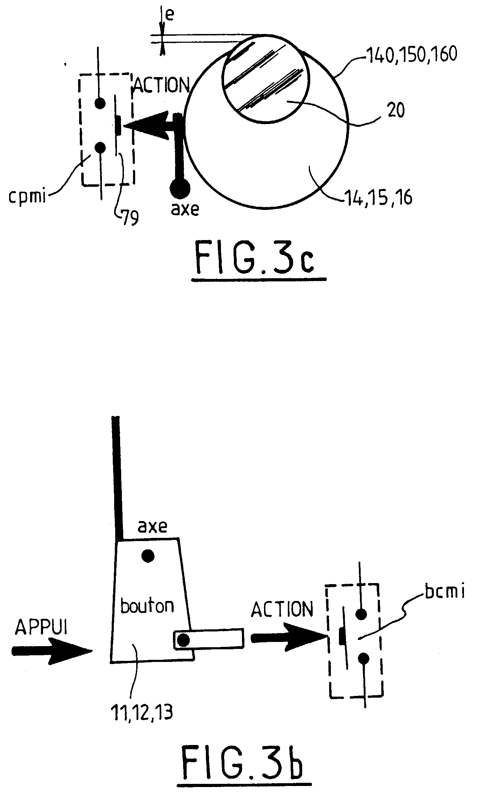

Le pilulier de poche modulaire est constitué comme représenté à la figure 3a d'un certain nombre de compartiments modulaires amovibles de distribution de médicaments sous des formes galéniques et tailles différentes. Pour plus de renseignements, on peut se référer à la demande de brevet français intitulée "Dispositif distributeur modulaire de poche de médicament" déposée ce jour par la requérante. Chaque compartiment contient un certain nombre de médicaments distribués par une écluse (14, 15, 16) pivotante dans un sas par suite de l'actionnement d'un bouton de distribution (11, 12, 13). La figure 3a représente un pilulier à trois compartiments, mais le nombre de compartiments est adaptables selon les besoins de l'ordonnance.

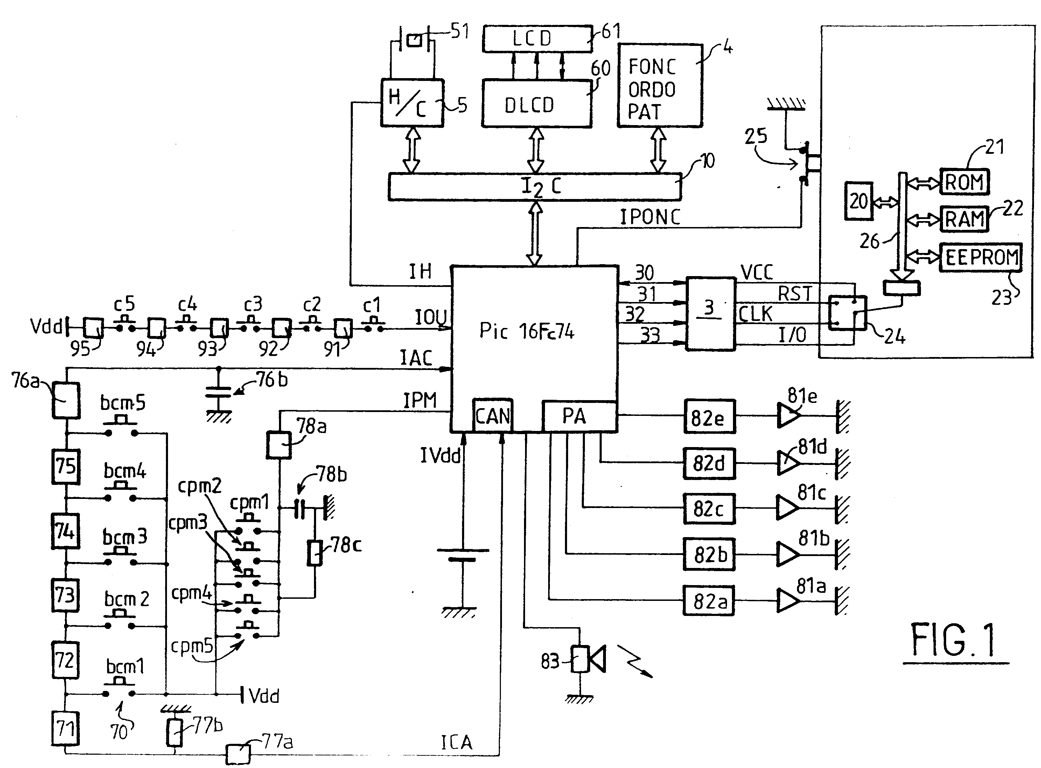

Comme représente à la figure 3b, l'appui sur le bouton (11, 12, 13) de délivrance d'un des compartiments modulaires du pilulier (2, fig. 3a) déclenche d'une part la fermeture d'un contact (bcmi) qui correspond au contact (bcm1 à bcm5) de la figure 1 pour le module actionné. Le bouton du compartiment actionné provoque par action mécanique la rotation d'une écluse associée (14, 15, 16) dont la dimension est étudiée de façon à ce que la gélule (20) ou le comprimé (20) soit légèrement en saillie par rapport au profil externe (140, 150, 160) de l'écluse et vienne actionner le contact mobile (79) d'un microcontact (cpmi) du compartiment modulaire permettant de détecter le passage d'un médicament (20) dans le sas de l'écluse. L'ensemble des contacts fixes du microcontact de passage du médicament (cmp1 à cpm5) sont montés en parallèle et reliés d'une part à la tension d'alimentation (Vdd), et d'autre part, par une première résistance (78a) à une entrée d'interruption d'un microprocesseur (1) appelée interruption de passage du médicament (IPM). Entre la résistance (78a) et les contacts (79) montés en parallèle est également branché un condensateur (78b) relié à la masse. Entre la masse et le condensateur (78b) est branchée une borne d'une résistance (78c) dont l'autre borne est reliée à l'ensemble des contacts en parallèle. Ainsi, par une seule ligne d'interruption, on peut détecter un passage de médicaments dans chacun des compartiments.

Le contact (bcmi) actionné par le bouton de délivrance du compartiment va permettre au système d'identifier le compartiment dans lequel l'utilisateur prélève le médicament par le circuit ci-après. Une première borne de chacun des microcontacts (bcm1 à bcm5) est reliée à la tension d'alimentation (Vdd), tandis que l'autre borne de chacun des microcontacts est reliée à chacun des points communs respectifs entre deux résistances adjacentes d'un ensemble de six résistances montées en série (71 à 75, et 76a). La dernière résistance (76a) est reliée également à l'entrée d'interruption d'appui sur compartiment (IAC).

La première résistance (71), du groupe de six résistances est reliée par une résistance (77a) à l'entrée d'interruption d'identification du compartiment actionné (ICA). Le point commun à cette résistance (77a) et à la première résistance (71), est relié par une résistance (77b) à la masse. L'entrée d'identification du compartiment actionné est reliée au convertisseur analogique numérique (CAN) du microprocesseur (1). De même, chaque compartiment est relié par un conducteur électrique à une sortie d'un port de sortie (PA) du microprocesseur. Chacune de ces cinq sorties alimente une résistance respective (82a à 82e) branchée en série avec une diode respective (81a à 81e) sur la masse. La première diode électroluminescente (81a) étant utilisée par le premier compartiment du pilulier. Cette première diode n'a donc pas besoin d'être reliée par un connecteur au circuit du microprocesseur. Chaque compartiment du pilulier est relié au suivant et au précédent par un circuit électrique qui comporte à chaque extrémité un bornier mâle et un bornier femelle.

Les autres diodes sont reliées chacune par une borne de chacun des borniers de chaque compartiment au compartiment associée. Les trois autres bornes de chaque bornier sont occupées par les liaisons (IPM, ICA, IAC). Et enfin, la huitième borne de chaque bornier est utilisée par la liaison IOU (Interruption d'Ouverture d'Urgence) qui est constituée par un ensemble de contact (C1 à C5) formé par les liaisons électriques des borniers mâles avec chacun des circuits d'un compartiment avec le bornier femelle du compartiment suivant. Le circuit comporte entre chaque bornier mâle et femelle du compartiment une résistance (91 à 95), et le dernier circuit étant relié à l'alimentation (VDD).

Cette entrée d'interruption d'ouverture d'urgence (IOU) est également branchée à un convertisseur analogique digital qui peut être, soit à l'extérieur du microprocesseur, soit réalisé dans le microprocesseur par un traitement par logiciel. Ainsi avec huit bornes de connexion pour chaque compartiment modulaire, on peut réaliser un pilulier comportant cinq compartiments de distribution de médicaments. Le microprocesseur du pilulier dialogue par l'intermédiaire des entrées d'interruption (IPM, ICA, IAC, IOU), et par le port de sortie (PA) avec chacun des compartiments modulaires du pilulier. Le microprocesseur dialogue également par l'intermédiaire du bus I₂C (10), avec d'une part une mémoire non volatile programmable et effaçable électriquement (4) de type EEPROM, d'autre part avec un circuit (5) d'horloge calendrier qui déclenche des interruptions d'horloge. Ce circuit d'horloge(5) fonctionne à l'aide d'un quartz (51). Enfin le bus I₂C est également branché par un circuit (60) de commande d'un afficheur à l'afficheur à cristaux liquides (61).

Nous rappellerons que le bus I₂C est un bus à deux lignes de commande, une première constituée par l'horloge bus, et une deuxième constituée par une ligne de données numériques. Le microprocesseur reçoit également sur une entrée d'interruption IPONC (Interruption de Présence Ou Non de la Carte), le signal provenant d'une borne d'un microcontact (25) dont l'autre borne est reliée à la masse. Ce microcontact (25) est ouvert lorsque la carte à puce (2) n'est pas présente dans le logement (54) prévu à cet effet dans le pilulier. La carte à puce (2) comporte un microprocesseur (20) relié par un bus interne (26) à, d'une part une mémoire morte non volatile (21), de type ROM, une mémoire vive (22) de type RAM, et d'autre part à une mémoire non volatile programmable de type EEPROM (23). Le bus interne (26) de la carte est relié à une plage de contacts électriques (24), lesquels reçoivent par un connecteur électrique les signaux I/O d'entrées-sorties de données, CLK d'horloge, RSI de remise à zéro et VCC d'alimentation en tension de la carte. Ces signaux proviennent d'un circuit d'interface pour cartes à puce (3), du type, par exemple, de celui commercialisé par la Société Philips sous la référence TDA8002A. Le circuit de commande de l'afficheur (61) est, par exemple du type de celui commercialisé par Philips sous la référence PCF8566. Le microprocesseur du pilulier est par exemple constitué par le microprocesseur de la société MICROCHIP commercialisé sous la référence PlC16FC74. Le circuit d'interface (3) communique avec le microprocesseur du pilulier (1) par l'intermédiaire de quatre lignes, une première (30) entrée-sortie avec le microprocesseur, une deuxième (31) permettant de déterminer le mode de fonctionnement du circuit d'interface, le troisième (32) permettant de déclencher une réinitialisation de la carte, et une quatrième (33) de commande de la tension VCC d'alimentation appliquée à la carte pour permettre d'interrompre rapidement cette tension lors du retrait de la carte.

Enfin, le microprocesseur du pilulier (1), contrôle un élément sonore (83) constitué, par exemple, par un vibreur permettant d'émettre un son suffisamment audible pour le patient.

Le microprocesseur du pilulier (1), comporte dans sa mémoire un programme de gestion des interruptions (IPM, IAC, IOU, et ICA) provenant des compartiments qui signalent le passage d'un médicament et un appui pour prise de médicament. Le microprocesseur exécute également lors de la mise en place de la carte à puce (2), un programme de gestion des échanges avec la carte à puce pour, dans un premier temps, lors de la mise en place de la carte à puce, assurer le transfert des informations chargées dans la mémoire programmable (23) de la carte à puce, vers la mémoire d'ordonnance (4) du pilulier. Ce même programme d'écriture sert également, lors de la détection d'une fin d'ordonnance par le programme exécuté par le pilulier, à transférer les informations mémorisées dans la mémoire d'ordonnance (4) du pilulier vers la mémoire programmable (23) de la carte.

Enfin le microprocesseur du pilulier (1) comporte un dernier programme de gestion de l'affichage qui permet de gérer les icônes disponibles sur l'afficheur (61) et représentées à la figure 2. Une première série d'icônes (611) permet, par une apparition, d'indiquer par le numéro que le compartiment correspondant à l' apparition est vide. Une deuxième série d'icônes (612), qui en temps normal ne seront pas visibles, peuvent apparaître en foncé sur l'écran pour indiquer, lors de leur mise en couleur foncée, la prise d'urgence de médicaments. Une troisième icône (613) permet d'indiquer la présence de la carte à puce dans le pilulier. Enfin, une quatrième icône (614) permet d'indiquer une baisse de tension sur l'alimentation. Cette icône indiquera une tension inférieure, par exemple, à 4,4 volts et la nécessité pour l'utilisateur de changer de pile. Deux dernières zones alphanumériques (615, 616) permettent d'afficher l'heure ou des messages d'erreurs signalant à l'utilisateur qu'une anomalie de fonctionnement s'est produite.

En fonctionnement, une fois que les différents compartiments du pilulier ont été connectés, et la carte à puce (2) introduite dans le pilulier, ce dernier charge la mémoire (4) avec l'ordonnance à exécuter et l'horloge (5) produit à intervalles réguliers des interruptions pour examiner si l'heure transmise au microprocesseur (1) du pilulier par le bus I₂C correspond à l'heure de prise de médicament.

Dans le cas où la réponse est positive, le microprocesseur charge la valeur du compartiment correspondant au médicament dont la prise est à effectuer et déclenche sur la sortie (PA) correspondante l'alimentation de la diode électroluminescente (82), en même temps qu'il provoque la mise en fonctionnement du vibreur (83). L'utilisateur voyant clignoter une diode (81) actionne le bouton (bcmi) du compartiment correspondant. L'actionnement de ce bouton provoque par la fermeture du contact (70) associé, la génération d'une interruption (IAC) depuis ce compartiment , et par une autre ligne (ICA), permet l'identification du compartiment actionné.

En effet, cette ligne ICA est reliée à un convertisseur analogique numérique (CAN) dont la sortie va indiquer la valeur de la résistance montée en série entre le convertisseur et le contact actionné. Ainsi, lorsqu'il s'agit du contact bcm5 du cinquième compartiment, les cinq résistances (71 à 75) sont reliées en série alors que lorsqu'il s'agit du contact bcm1, il n'y a qu'une seule résistance (71), sur l'entrée du convertisseur CAN, ce qui modifie la tension reçue par le convertisseur et la valeur de sortie du convertisseur analogique numérique qui permet ainsi au microprocesseur de déterminer le numéro du compartiment actionné.

L'actionnement du bouton (bcm1) provoque mécaniquement la rotation de l'écluse du sas du premier compartiment, le médicament déclenche la fermeture au passage du contact (cpmi) de passage de médicament du compartiment correspondant, si le compartiment contient encore des médicaments. Cette fermeture de contact provoque une interruption sur l'entrée (IPM).

La détection des deux interruptions dans l'ordre successif (IAC puis IPM) permet de s'assurer du bon déroulement de la prise de médicaments et de l'effectivité de cette dernière. La présence de ces deux interruptions, après une interruption (IH) correspondant à une heure de prises de médicaments, permet de vérifier que le médicament a été pris dans une plage horaire correspondant à celle de la prise, à un écart déterminé autorisé, par exemple de 15 min.

Si le patient souhaite pour une raison particulière effectuer une prise d'urgence, il peut quand même appuyer sur le bouton (bcmi) du compartiment correspondant au médicament souhaité, et l'utilisation du compartiment ainsi que le passage du médicament seront enregistrés comme une prise d'urgence, puisque non déclenchée dans un intervalle de temps correspondant à la tolérance de prise.

En effet, le programme détectant qu'il n'y a pas d'interruption IH dans un délai antérieur ou postérieur à la prise de médicament, pour le compartiment correspondant à la prise en tire la conclusion ci-dessus. Le passage de chaque médicament pour chaque compartiment étant également détecté, il est possible par programme de prévoir le décomptage des médicaments pris, et de décrémenter dans la mémoire un compteur chargé initialement par le contenu de la mémoire de la carte à puce et, qui indique le nombre de médicaments d'un compartiment qu'il reste à prendre.

Le microprocesseur (1) du pilulier est chargé initialement avec un programme d'exploitation qui gère les interruptions, et qui comporte un module de lecture-écriture, entre la mémoire programmable (4) du pilulier et la mémoire programmable (23) du support amovible d'informations (2).

Ce support amovible d'informations (2) comporte dans sa mémoire programmable (23) des fichiers ORDO organisés en table et comportant les champs suivants :

| *NOM DU CHAMP* | *TYPE* |
|---|---|
| N°Ordonnance | Nombre |
| DateOrdonnance | Date/Heure |
| N°Canal | Nombre |
| NbUnitésPrise | Nombre |
| NbPrisesJour | Nombre |
| HeuresDélivrance | Mémo |

Un second fichier FONC également organisé en table comportant les champs suivants :

| *NOM DU CHAMP* | *TYPE* |
|---|---|
| N°Ordonnance | Nombre |
| NomMédicament | Texte |
| N°Canal | Nombre |
| DateOuverture | Date/Heure |
| NbUnité | Nombre |
| HeuresOuverture | Texte |

Ainsi qu'un autre fichier PAT correspondant aux informations relatives aux patients, et comportant les champs suivants :

| *NOM DU CHAMP* | *TYPE* |
|---|---|
| NomPatient | Texte |
| PrénomPatient | Texte |
| DateNaissancePatient | Date/Heure |
| N°SécuritéPatient | Nombre |
| N°Ordonnance | Nombre |
| DateOrdonance | Nombre |
| NbJoursTraitement | Nombre |
| IdentMédecin | Nombre ou/et texte |
| IdentPilulier | Nombre |
| DateOuvertureUrgence | Date/Heure |
| HeureOuvertureUrgence | Date/Heure |

Et éventuellement un fichier "posologie".

Le programme d'exploitation du pilulier va détecter la disparition de l'interruption de l'ouverture d'urgence IOU par la fermeture des contacts c1 à c3, ou c4, ou c5, selon le nombre de compartiments assemblés pour constituer le pilulier permettant de délivrer les médicaments de l'ordonnance Le dernier compartiment (5) assemblé au pilulier comporte une liaison avec la source d'alimentation VDD. Lorsque la carte (2) est introduite, le contact (25) se ferme et le niveau de la masse est présent sur l'entrée IPONC, ce qui fait disparaître l'interruption d'absence de carte.

Le programme, lors de la détection de la disparition de ces deux interruptions, fait un saut de programme de chargement des informations contenues dans la mémoire (23) du support amovible et de transfert et écriture de ces informations dans la mémoire programmable (4) du pilulier.

Les fichiers ORDO, FONC, et PAT, vont donc se trouver intégralement transférés dans cette mémoire (4). En fin d'écriture, le programme se branche sur la boucle de veille des interruptions d'horloge. Dans le fichier de fonctionnement qui au démarrage ne comporte pas d'autres informations que le numéro d'ordonnance, la date d'ordonnance, et le nom des médicaments ainsi que le numéro de canal affecté au médicament, c'est-à-dire le numéro de compartiment, le pilulier va au fur et à mesure des événements actualiser les champs "DateOuverture" et "HeureOuverture" pour signaler la date de l'ouverture du pilulier, ainsi que l'heure d'ouverture pour la prise de médicament, et le nombre d'unités introduites dans le pilulier. De même, le fichier PAT qui comporte initialement les informations concernant le nom du patient, son prénom, sa date de naissance, son numéro de sécurité sociale, le numéro d'ordonnance, la date d'ordonnance, le nombre de jours de traitement, l'identité du médecin, l'identité du pilulier va être actualisé au fur et à mesure des ouvertures d'urgence dans les champs "DateOuvertureUrgence" et "HeureOuvertureUrgence".

Enfin, à chaque interruption d'horloge provoquée par la mise à jour de l'heure sur l'afficheur LCD (61), le programme va balayer également les adresses correspondant aux champs "HeureDélivrance" pour chacun des médicaments implantés dans le pilulier de façon à déterminer si l'heure de l'horloge correspond à une heure de délivrance et déclencher le signal d'indication sur le compartiment correspondant au numéro de canal.

La réalisation ainsi effectuée permet de limiter au maximum les problèmes de programmation du pilulier et donc les interfaces nécessaires pour l'utilisateur. D'autre part, il limite également le nombre de liaisons nécessaires entre les compartiments amovibles tout en permettant de détecter à la fois la prise de médicaments, ou la tentative de prise de médicaments, même si le compartiment n'a plus de médicaments. Enfin, il permet de détecter les désassemblages intempestifs des compartiments. Ceci est particulièrement important sur un pilulier modulaire de poche dont la modularité permet d'adapter le pilulier à l'ordonnance délivrée par le médecin au patient et optimiser la taille du pilulier. De plus, les compartiments peuvent être adaptés pour délivrer soit des gélules, soit des comprimés dans des gammes de tailles différentes.

D'autres modifications à la portée de l'homme de métier font également partie de l'esprit de l'invention.

## Revendications

1. Pilulier électronique de poche à compartiments multiples caractérisé en ce qu'il comporte un circuit électronique à microprocesseur (1) contrôlant une mémoire (4) destinée à contenir l'ordonnance, un circuit (60) de commande d'un dispositif d'affichage (61), un voyant d'indications du compartiment à utiliser (81a à 81e) pour chaque compartiment, des moyens (3) de chargement de la mémoire (4) par des informations contenues dans un support amovible d'informations (2) et constituée par l'ordonnance codée, des moyens de distribution de médicaments à l'unité et adaptables à des tailles et formes galéniques différentes, des moyens de contrôle (cpm1 à cpm5) automatique associé à chaque compartiment du passage d'un médicament et des moyens de déterminations (bcm1 à bcm5) automatiques du compartiment dans lequel le médicament a été prélevé.

2. Pilulier électronique de poche selon la revendication 1, caractérisé en ce qu'il comporte des moyens d'enregistrement (1, 4) de la prise du médicament dans un fichier, et des moyens de décrémenter à chaque prise un compteur permettant de connaître le nombre de médicaments restant contenus dans un compartiment.

3. Pilulier électronique de poche selon la revendication 2, caractérisé en ce qu'il comporte des moyens de détecter une prise d'urgence et d'enregistrer dans un second fichier de la mémoire (4) la prise d'urgence.

4. Pilulier électronique de poche à compartiment multiples selon l'une quelconque des revendications 1 à 3, caractérisé en ce que le circuit électronique intégré (1) est un circuit à microprocesseur, le dispositif d'affichage (61) est à cristaux liquides.

5. Pilulier électronique de poche selon l'une quelconque des revendications 1 à 4, caractérisé en ce que les compartiments sont amovibles et comportent des moyens de connexions entre eux et le circuit intégré (1) qui contrôle le fonctionnement du pilulier, et des moyens (c1 à c5) de vérifier l'intégrité du pilulier.

6. Pilulier électronique de poche selon la revendication 5, caractérisé en ce qu'il comporte des moyens de déterminer (91 à 95, CAN) le nombre de compartiments du pilulier.

7. Pilulier électronique de poche selon une des revendications précédentes, caractérisé en ce qu'il comporte des moyens (25) de détection de la présence du support d'informations amovible (2).

8. Pilulier électronique de poche selon l'une quelconque des revendications 1 à 7, caractérisé en ce que le support d'informations amovible est une carte à puce (2) à microprocesseur (20) et mémoire non volatile programmable (23).

9. Pilulier électronique de poche selon la revendication 2, caractérisé en ce que les moyens de détection du passage d'un médicament sont constitués dans chaque mécanisme distributeur de chaque compartiment amovible par l'interrupteur (cpm1 à cpm5) qui est actionné par le passage du médicament.

10. Pilulier électronique de poche selon la revendication 2 ou 9, caractérisé en ce que les moyens de détermination du compartiment sont constitués par une résistance (71 à 75) associée à chaque compartiment, les résistances (71 à 75) étant reliées en série à un convertisseur analogique digital (CAN) et par un interrupteur (bcm1 à bcm5) commandé par le bouton de manoeuvre du mécanisme distributeur de chaque compartiment, les interrupteurs (bcm1 à bcm5) étant reliés par une première de leurs bornes entre deux résistances (71 à 76) respectives et par l'autre borne à une alimentation (Vdd).

11. Pilulier électronique de poche selon l'une quelconque des revendications précédentes, caractérisé en ce que le microprocesseur détecte et enregistre le suivi de l'ordonnance par le patient les prises d'urgence et incidents de fonctionnements.

12. Pilulier électronique de poche selon la revendication 2, caractérisé en ce que le programme du microprocesseur (1) gère les échanges avec le support d'informations amovible pour d'une part, charger la mémoire d'ordonnance (1 à 4) lors de la réalisation de l'intégrité du pilulier et, d'autre part, mémoriser dans le support d'informations amovible (2) le suivi du traitement et les prises d'urgence.

13. Pilulier électronique de poche selon la revendication 12, caractérisé en ce que la mémorisation du suivi du traitement et des prises d'urgence s'effectue lors de la détection de la fin de l'ordonnance.

14. Pilulier électronique de poche selon la revendication 12, caractérisé en ce que la mémorisation du suivi du traitement et des prises d'urgence s'effectue lors de chaque déclenchement d'interruption.

15. Pilulier électronique de poche à compartiments multiples selon la revendication 5, caractérisée en ce que le circuit intégré (1) est relié par des liaisons électriques à chacun des compartiments pourvus d'un mécanisme de distribution de médicaments, lesdits compartiments étant pourvus de moyens de détection de l'actionnement de ce mécanisme de distribution, les moyens de détection de l'actionnement étant constitués par un interrupteur (bcmi) commandé par un bouton de manoeuvre (11, 12, 13) du mécanisme distributeur de chaque compartiment, ledit interrupteur (bcmi) étant connecté entre une résistance associée au compartiment, et l'alimentation électrique du circuit, chacune des résistances de chaque compartiment étant montée en série avec celle du compartiment suivant et reliée par une résistance supplémentaire à l'entrée d'un convertisseur analogique numérique permettant au circuit intégré de déterminer en fonction de l'amplitude du signal reçu l'identité du compartiment.
